# EUROPÄISCHE PATENTSCHRIFT

(11) **EP 0 977 037 B1**
(45) Veröffentlichungstag und Bekanntmachung des Hinweises auf die Patenterteilung: **31.08.2005**
(21) Anmeldenummer: 99810635.5
(22) Anmeldetag: 14.07.1999
(51) Int. Cl.: G01N 35/00, B01L 9/06, B01L 7/00

(54) **Magnetseparator**
Magnetic separator
Séparateur magnétique

(30) Priorität: 31.07.1998 CH 161998
(43) Veröffentlichungstag der Anmeldung: 02.02.2000
(73) Patentinhaber: Tecan Trading AG, 8708 Männedorf (CH)
(72) Erfinder: Rutishauser, Marcel, 8633 Wolfhausen (CH); Bartl, Ralf, Dr., 8630 Rüti (CH)
(74) Vertreter: OK pat AG

(56) Entgegenhaltungen:
- EP-A- 0 479 448
- DE-A- 3 926 462
- US-A- 5 055 408
- US-A- 5 443 791
- US-A- 5 705 062

## Beschreibung

### Technisches Gebiet

Die Erfindung betrifft einen Magnetseparator gemäss dem Oberbegriff des Anspruchs 1. Derartige Magnetseparatoren werden in der chemischen und molekularbiologischen Analytik zur Abtrennung bestimmter Substanzen aus einer Lösung verwendet. Dabei lagern sich die besagten Substanzen in einem Probengefäss o. dgl. an ferromagnetische Partikel an, die mittels eines Magnetfeldes manipuliert werden.

### Stand der Technik

Aus der EP-A-0 497 448 ist ein gattungsgemässer Magnetseparator bekannt mit einer festen Aufnahme für eine Titerplatte und einer mittels vier über Stossstangen betätigbarer Hebel zwischen einer Aktivposition und einer Passivposition vertikal verschiebbaren Magnetanordnung. Es besteht jedoch keine Möglichkeit, die Probenflüssigkeit innerhalb des Magnetseparators gänzlich aus dem Nahbereich der Magnetanordnung zu entfernen und z. B. einer Behandlung anderer Art zuzuführen, was jedoch bei vielen Anwendungen nötig ist. Soll etwa die Probenflüssigkeit erhitzt werden, so muss eine separate Heizstation vorgesehen werden und die Titerplatte zwischen dem Magnetseparator und der Heizstation verschoben werden. Dies mus entweder manuell geschehen, was aus verschiedenen Gründen nicht wünschbar ist oder es müssen entsprechende Transportmittel vorgesehen werden. Etwa schon vorhandene Transportmittel werden durch den Transport der Titerplatte jeweils für längere Zeit blockiert und stehen für andere Aufgaben nicht zur Verfügung. Zudem ist der Magnetseparator nur für Probenflüssigkeitsbehälter einer Art tauglich.

Ein weiterer Magnetseparator ist aus der US-A-5 443 791 bekannt. Hier ist im Rahmen einer Arbeitsstation eine Wascheinrichtung vorgesehen, welche eine heiz- und kühlbare Metallplatte zur Aufnahme von Probenflüssigkeitsbehältern aufweist, unterhalb welcher eine vertikal verschiebbare Magnetanordnung angebracht ist. Diese Anordnung, bei der ohne räumliche Trennung eine weitere Funktion in den Magnetseparator integriert ist, hat den Nachteil, dass die Magnete verhältnismässig hohen Temperaturen ausgesetzt werden, was insbesondere für Permanentmagnete schädlich ist und ihre Wirksamkeit vermindert. Ausserdem ist der Aufbau der Station verhältnismässig kompliziert und die Tauglichkeit ebenfalls auf Probenflüssigkeitsbehälter einer Art eingeschränkt.

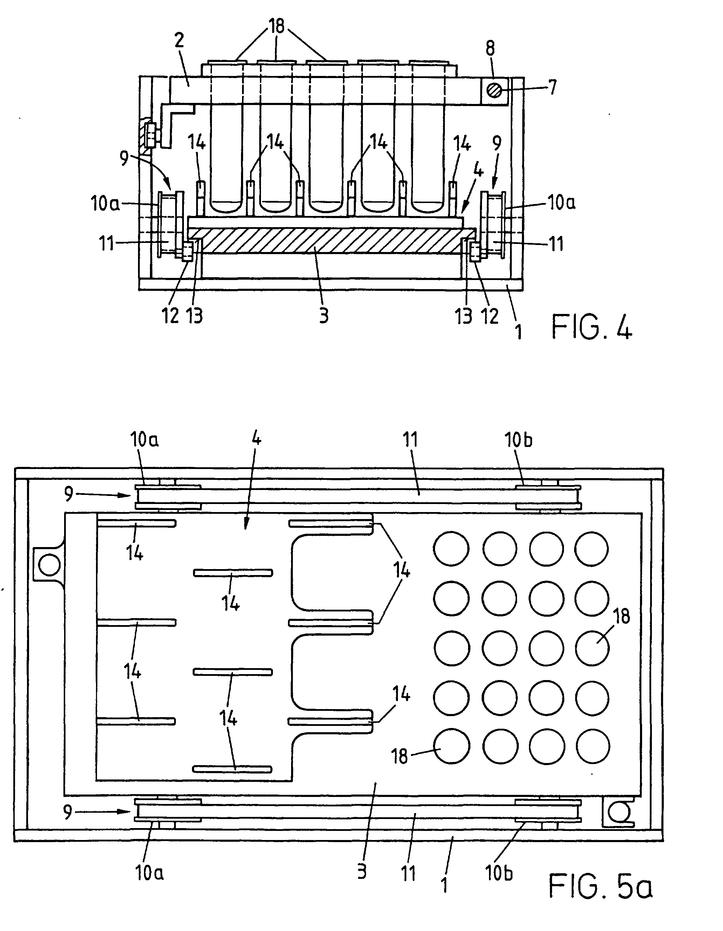

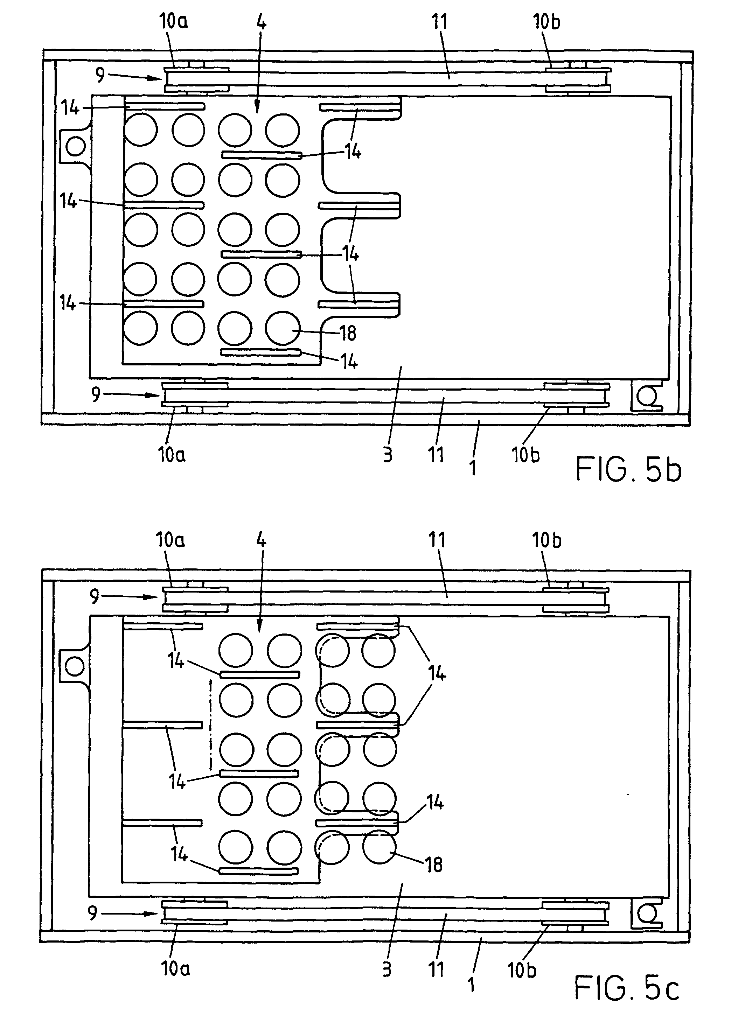

Aus US 5,705,062 ist zudem ein Analysegerät zur Trennung von magnetischen Mikropartikeln von einer Suspension bekannt. Der Trennteil umfasst zwei Permanentmagnete, zwischen denen Reaktionsbehälter mit der Suspension angeordnet werden können. Die Reaktionsbehälter sind bevorzugt in einem drehbaren Halter befestigt und können so in den Wirkungsbereich der Magnete hinein und wieder daraus heraus bewegt werden (vgl. dort Fig. 4 und 5).

### Darstellung der Erfindung

Der Erfindung liegt die Aufgabe zu Grunde, einen Magnetseparator anzugeben, der eine Heizvorrichtung, eine Aufnahme für mindestens einen Probenflüssigkeitsbehälter sowie eine Magnetanordnung umfasst, mit welchem die Probenflüssigkeit gänzlich aus dem Nahbereich der Magnetanordnung entfernbar ist und störende Wechselwirkungen zwischen der Heizvorrichtung und der Magnetanordnung verhindert werden.

Diese Aufgabe wird durch die Merkmale im kennzeichnenden Teil des Anspruchs 1 gelöst. Die Erfindung schafft einen kompakten, verhältnismässig einfach aufgebauten Magnetseparator, mit welchen es möglich ist, die Probenflüssigkeit anderen Bearbeitungsschritten zu unterwerfen, insbesondere sie zu erhitzen, ohne dass störende Wechselwirkungen mit der Magnetanordnung aufträten. Der erfindungsgemässe Magnetseparator kann so ausgebildet werden, dass alle bei bestimmten Verfahren erforderlichen Schritte innerhalb desselben durchgeführt werden können, ohne dass zusätzlich Moduln oder externe Transportmittel benötigt würden. Er kann auch durch geringfügige Modifikationen für Probenflüssigkeitsbehälter verschiedender Art und Grösse umgebaut werden, wobei auch relativ grosse Behälter bearbeitet werden können.

Der erfindungsgemässe Magnetseparator kann sehr gut in eine grössere Arbeitsstation mit weiteren Moduln und Transportmitteln wie etwa einem Robotarm, der auch zum Pipettieren und für anderes eingesetzt wird, eingebaut werden. Während der Funktionsabläufe im Magnetseparator werden die Transportmittel von demselben nicht beansprucht und stehen vollständig für ihre übrigen Funktionen zur Verfügung.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1a: eine Seitenansicht des erfindungsgemässen Magnetseparators mit einer ersten Art von Probenflüssigkeitsbehältern in einer ersten Einstellung,
- Fig. 1b: eine Ansicht entsprechend Fig. 1a, mit dem Magnetseparator in einer zweiten Einstellung,
- Fig. 1c: eine Ansicht entsprechend Fig. 1a, mit dem Magnetseparator in einer dritten Einstellung,
- Fig. 1d: eine Ansicht entsprechend Fig. 1a, mit dem Magnetseparator in einer vierten Einstellung,
- Fig. 2a: eine teilweise geschnittene Vorderansicht mit entfernten Gehäuseteilen des erfindungsgemässen Magnetseparators in der zweiten Einstellung,
- Fig. 2b: eine Ansicht entsprechend Fig. 2a des erfindungsgemässen Magnetseparators in der ersten Einstellung,
- Fig. 2c: eine Ansicht entsprechend Fig. 2a des erfindungsgemässen Magnetseparators in einer modifzierten zweiten Einstellung,
- Fig. 3a: eine teilweise geschnittene Vorderansicht mit entfernten Gehäuseteilen des erfindungsgemässen Magnetseparators, mit einer zweiten Art von Probenflüssigkeitsbehältern, in der zweiten Einstellung,
- Fig. 3b: eine Ansicht entsprechend Fig. 3a des erfindungsgemässen Magnetseparators in der ersten Einstellung,
- Fig. 3c: eine Ansicht entsprechend Fig. 3a des erfindungsgemässen Magnetseparators in einer modifzierten zweiten Einstellung,
- Fig. 4: eine teilweise geschnittene Vorderansicht mit entfernten Gehäuseteilen des erfindungsgemässen Magnetseparators, mit einer dritten Art von Probenflüssigkeitsbehältern,
- Fig. 5a: eine Draufsicht auf den erfindungsgemässen Magnetseparator, mit der dritten Art von Probenflüssigkeitsbehältern, in einer ersten Einstellung,
- Fig. 5b: eine Ansicht entsprechend Fig. 5a des erfindungsgemässen Magnetseparators in einer zweiten Einstellung und
- Fig. 5c: eine Ansicht entsprechend Fig. 5a des erfindungsgemässen Magnetseparators in einer modifzierten zweiten Einstellung.

### Wege zur Ausführung der Erfindung

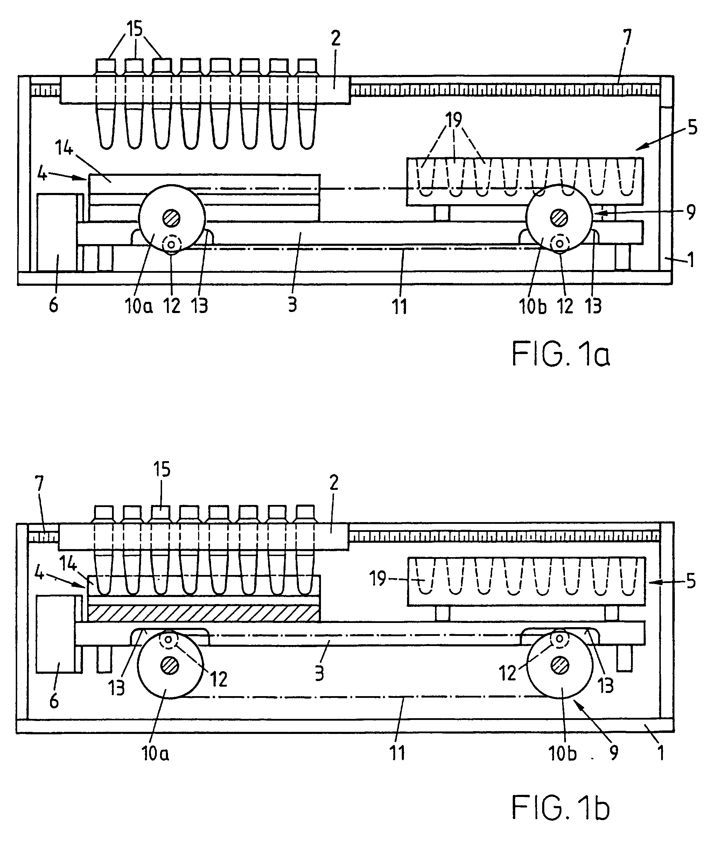

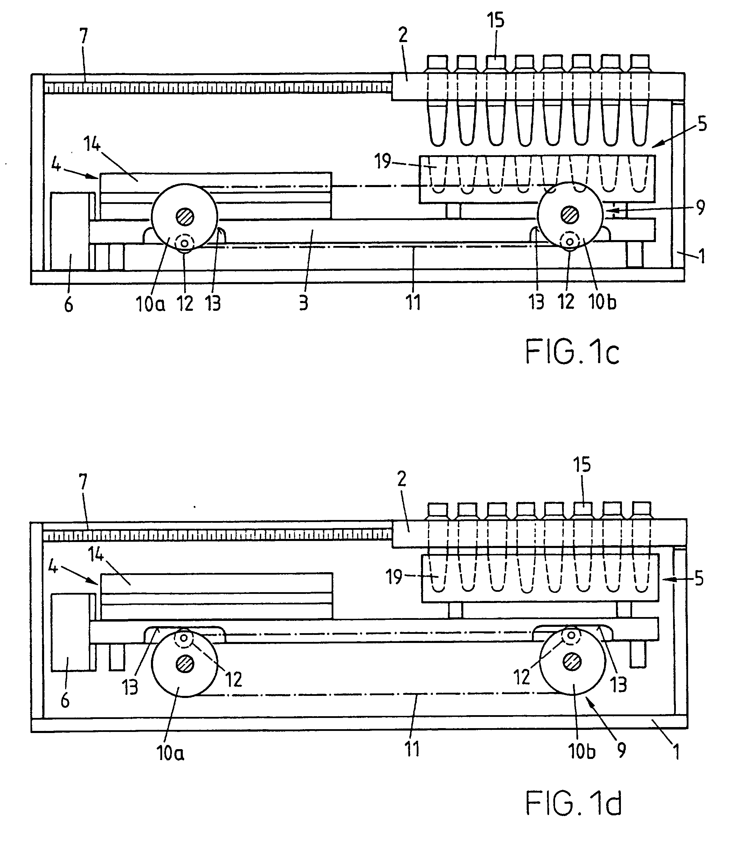

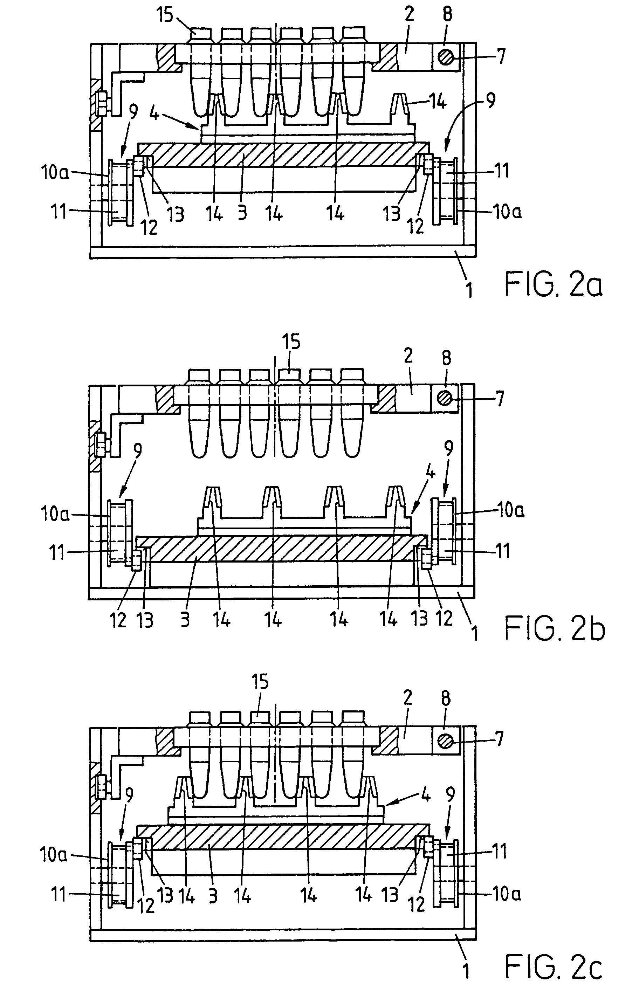

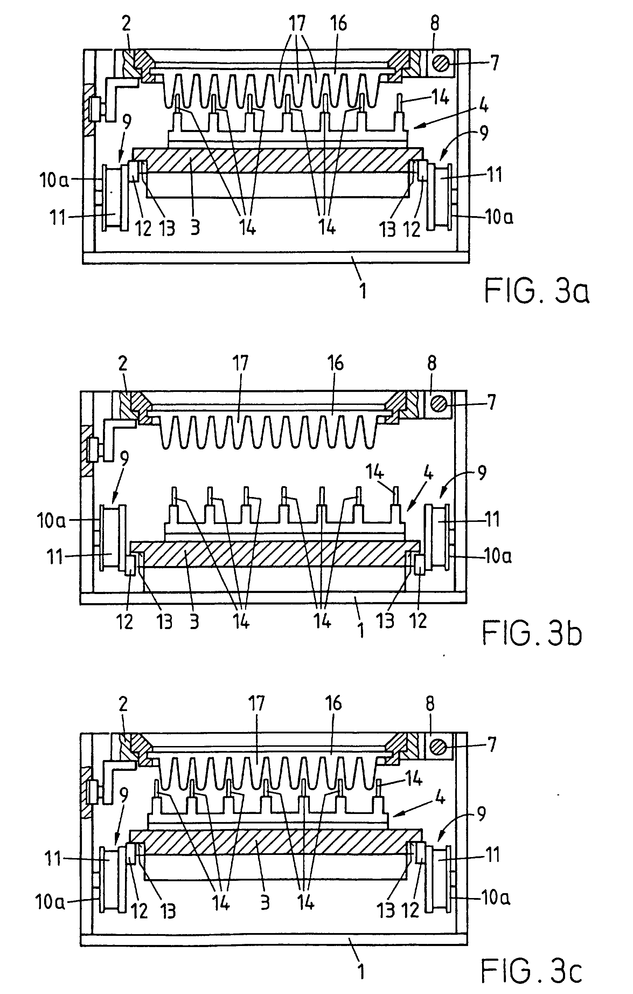

Der erfindungsgemässe Magnetseparator weist in einem quaderförmigen Gehäuse 1 eine Aufnahme 2 für Probenflüssigkeitsbehälter auf, die als Rahmen ausgebildet ist, welcher mehrere einander überlagernde Oeffnungen umgibt. Im Beispiel sind es zwei einander kreuzende rechteckförmige Oeffnungen, in die wahlweise drei verschiedene Arten von Probenflüssigkeitsbehältern eingesetzt werden können, nämlich in einer geeigneten Halterung 48 Eppendorf-Gefässe (Fig. 1a-d, 2a-c) eine Mikrotiterplatte mit 96 Gefässen (Fig. 3a-c), oder wieder in einer geeigneten Halterung 20 Reagenzgläser (Fig. 4, 5a-c). Die Aufnahme 2 erstreckt sich über etwas weniger als die halbe Länge des Gehäuses 1.

Unterhalb der Aufnahme 2 (Fig. 1a-d, Fig. 2a-c) ist eine Basisplatte 3 im Gehäuse 1 angeordnet, welche sich im wesentlichen über die ganze Länge desselben erstreckt und, in Längsrichtung nebeneinander angeordnet, eine Magnetanordnung 4 und eine als Heizplatte 5 ausgebildete Heizvorrichtung trägt. Neben der Magnetanordnung 4 ist am Ende der Basisplatte 3 ein Schrittmotor 6 angeordnet, mittels dessen die Magnetanordnung 4 quer zur Längsrichtung verschoben werden kann. Die Aufnahme 2 ist zwischen einer Arbeitsposition, in der sie oberhalb der Magnetanordnung 4 liegt (Fig. 1a,b) und einer Heizposition (Fig. 1c,d), in der sie oberhalb der Heizplatte 5 liegt, mittels z. B. eines Schrittmotors über eine Gewindestange 7 (Fig. 2a-c), die mit einer Gewindebuchse 8 an der Aufnahme 2 eingreift, horizontal verschiebbar.

Die Magnetanordnung 4 und die Heizplatte 5 sind beide von der Basisplatte 3 nach oben abnehmbar, so dass sie manuell oder mittels eines Robotarms ausgetauscht werden können. Es gibt drei verschiedene, auf die drei Anordnungen von Probenflüssigkeitsbehältern verschiedener Art und Grösse abgestimmte Ausführungen der Magnetanordnung 4 (s. Fig. 2a-c, Fig. 3a-c, Fig. 4, 5a-c) sowie zwei Ausführungen der Heizplatte 5, welche auf die ersten beiden Arten von Probenflüssigkeitsbehältern abgestimmt sind, während bei Bearbeitung der dritten Art von Probenflüssigkeitsbehältern keine Heizplatte verwendet wird.

Die horizontal unverschieblich geführte Basisplatte 3 ist mittels einer Hebevorrichtung 9 vertikal zwischen einer Passivposition, in welcher sie, gegenüber der Aufnahme 2 abgesenkt, auf dem Boden des Gehäuses 1 abgestützt ist, und einer Aktivposition, in der sie verhältnismässig knapp unterhalb der Aufnahme 2 liegt, verschieblich. Die Hebevorrichtung 9 weist an jeder Längsseite des Gehäuses 1 ein Zahnräderpaar auf. Die Zahnräder 10a,b eines Paares sind jeweils in der Nähe der entgegengensetzten Enden des Gehäuses 1 angeordnet, um quer zur Längsrichtung orientierte Achsen drehbar und durch einen über sie laufenden Zahnriemen 11 verbunden. Jedes der Zahnräder 10a,b auf jeder Längsseite weist einen exzentrisch angeordneten Fortsatz, insbesondere eine Rolle 12 auf, welche unter eine nach unten weisende Hebefläche 13 an der Basisplatte 3 greift.

Der Zahnriemen 11 kann ausserdem über ein von einem Schrittmotor angetriebenes Antriebsrad laufen oder es kann eines der Zahnräder 10a,b selbst angetrieben sein. Zwei auf verschiedenen Längsseiten des Gehäuses auf gleicher Höhe angeordnete Zahnräder - es kann sich gegebenenfalls auch um die Antriebsräder handeln - können miteinander durch eine gemeinsame Achse verbunden sein, so dass nur ein Antrieb erforderlich ist. In der in Fig. 1a dargestellten Passivposition der Basisplatte 3 sind die exzentrischen Rollen 12 jeweils in ihrer tiefsten Position, in der in Fig. 1b dargestellten Aktivposition, in der die Basisplatte 3 über die Hebeflächen 13 auf den Rollen 12 abgestützt ist, in der höchsten.

Die Magnetanordnung 4 weist jeweils mehrere sich in Längsrichtung erstreckende, seitlich voneinander beabstandete Magnetplatten 14 auf. Die für die Eppendorf-Gefässe 15 (s. Fig. 2a-c) geeignete Magnetanordnung 4 besteht aus vier derartigen Magnetplatten 14, deren seitlicher Abstand so bemessen ist, dass zwei nebeneinander in der Halterung angeordnete Eppendorf-Gefässe 15 zwischen ihnen Platz haben. Jede Magnetplatte 14 besteht aus zwei Magnetstreifen, die durch eine Schicht aus magnetisch gut leitendem Material getrennt unmittelbar nebeneinander angeordnet und gegen oben leicht gegeneinander geneigt sind, so dass sie an den Wänden der Eppendorf-Gefässe 15 anliegen. Sie sind gegeneinander, also etwa quer zur Längsrichtung des Gehäuses 1 magnetisch orientiert mit nach aussen weisenden Nord- und gegeneinanderweisenden Südpolen. Die Polung kann auch umgekehrt sein.

Die für die Mikrotiterplatte 16 (Fig. 3a-c) geeignete Magnetanordnung 4 weist sieben einzelne Magnetplatten 14 auf, die ebenfalls quer zur Längsrichtung magnetisch orientiert sind. Der Abstand zweier nebeneinander angeordneter Magnetplatten 14 ist wiederum so bemessen, dass gerade zwei Gefässe 17 der Mikrotiterplatte 16 zwischen ihnen Platz haben.

Das gleiche gilt für die für Reagenzgläser 18 (Fig. 4, 5a-c) geeignete Magnetanordnung 4, welche drei Gruppen von je drei nebeneinander angeordneten Magnetplatten 14 aufweist, von denen sich jede über ein Drittel der Länge der Magnetanordnung 4 erstreckt. Die mittlere Gruppe ist quer zur Längsrichtung um die Hälfte des Abstandes zwischen zwei benachbarten Magnetplatten 14 einer Gruppe gegen die äusseren Gruppen versetzt.

Die Heizplatte 5 ist eine Metallplatte mit Ausnehmungen 19 zur passgenauen Aufnahme der unteren Endbereiche der Probenflüssigkeitsbehälter. Sie ist durch an ihrer Unterseite angeordnete Keramik-Widerstandselemente elektrisch heizbar.

Wie in Fig. 1a-d mit Eppendorf-Gefässen 15 als Probenflüssigkeitsbehältern dargestellt ist, gibt es vier grundlegende Einstellungen des Magnetseparators. In der ersten (Fig. 1a) ist die Basisplatte 3 und mit ihr die Magnetanordnung 4 und die Heizplatte 5 in Passivposition, d. h. abgesenkt, so dass sie am Boden des Gehäuses 1 abgestützt ist. Die Aufnahme 2 befindet sich in einer Arbeitsposition, in der sie oberhalb der Magnetanordnung 4 liegt. Die Magnetplatten 14 sind dabei so weit von den Eppendorf-Gefässen 15 entfernt, dass praktisch keine magnetische Einwirkung auf deren Inhalt erfolgt. In der zweiten Einstellung (Fig. 1b) ist die Basisplatte 3 in der Aktivposition, während die Aufnahme 2 weiterhin in der Arbeitsposition verbleibt. Die Magnetplatten 14 ragen jeweils zwischen zwei benachbarte Reihen von Eppendorf-Gefässen 15 und berühren die letzteren, so dass das von ihnen ausgehende Magnetfeld stark auf ihren Inhalt einwirkt.

Nach Absenken der Basisplatte 3 in die Passivposition kann die Aufnahme 2 in die Heizposition verschoben werden, in der sie oberhalb der Heizplatte 5 liegt (Fig. 1c). Wird die Basisplatte 3 wieder in die Aktivposition angehoben (Fig. 1d), so nehmen die Ausnehmungen 19 der Heizplatte 5 die unteren Endbereiche der Eppendorf-Gefässe 15 auf. Ihr Inhalt kann nun beheizt werden. Nach Absenken der Basisplatte 3 in die Passivposition kann die Aufnahme 2 dann wieder in die Arbeitsposition verschoben werden.

Wie in Fig. 2a-c dargestellt, kann die Magnetanordnung 4 für die Eppendorf-Gefässe 15 z. B. mittels des Schrittmotors 6 quer zur Längsrichtung zwischen zwei verschiedenen Lagen auf der Basisplatte 3 verschoben werden. Die Differenz zwischen den beiden Lagen ist dabei so bemessen, dass eine Magnetplatte 14, die in der ersten Lage (Fig. 2b) etwa rechts einer bestimmten Reihe von Eppendorf-Gefässen 15 positioniert war, in der zweiten Lage (Fig. 2c) links von der gleichen Reihe positioniert ist. Für einen Wechsel zwischen den beiden Positionen wird die Magnetanordnung 4 jeweils in die Passivposition (Fig. 2b) abgesenkt.

Ganz analog ist auch die für die Mikrotiterplatte 16 geeignete Magnetanordnung 4 mittels des Schrittmotors 6 zwischen einer ersten und einer zweiten Lage querverschiebbar, so dass eine in der ersten Lage (Fig. 3a) rechts einer bestimmten Reihe von Gefässen 17 liegende Magnetplatte 14 in der zweiten Position (Fig. 3c) links derselben liegt. Auch hier erfolgt der Wechsel der Positionen in der Passivposition der Magnetanordnung 4.

Bei Verwendung von Reagenzgläsern 18 und der für diese geeigneten Magnetanordnung 4 bleibt die Basisplatte 3 stets in der Passivposition. In einer ersten Einstellung (Fig. 5a), in der die Position der Aufnahme 2 und der Basisplatte 3 der dritten Einstellung mit den anderen Probenflüssigkeitsbehältern entspricht, ist die Aufnahme 2 gegenüber der Magnetanordnung 4 verschoben, so dass dieselbe passiv ist und nicht auf die Probenflüssigkeit in den Reagenzgläsern 18 einwirkt. In einer zweiten Einstellung, in der die Position der Aufnahme 2 und der Basisplatte 3 ganz oder nahezu der ersten Einstellung mit den anderen Probenflüssigkeitsbehältern entspricht, liegt die Aufnahme 2 oberhalb der Magnetanordnung 4, wobei jedoch die Magnetplatten 14 wegen der grossen Länge der Reagenzgläser 18 zwischen deren unteren Endbereichen liegen und auf deren Inhalt einwirken.

Die Aufnahme 2 kann zwischen einer ersten Lage (Fig. 5b) und einer zweiten Lage (Fig. 5c) verschoben werden. In der ersten Lage ist die Aufnahme 2 ganz auf die von der Magnetanordnung 4 eingenommene Seite des Gehäuses 1 geschoben, so dass eine erste Hälfte der Reagenzgläser 18 auf der Höhe der an das Ende des Gehäuses 1 anschliessenden äusseren Gruppe von Magnetplatten 14 liegt und die zweite Hälfte auf der Höhe der mittleren Gruppe. In der zweiten Lage ist die Aufnahme 2 in Längsrichtung derart verschoben, dass die erste Hälfte der Reagenzgläser 18 auf der Höhe der mittleren Gruppe der Magnetplatten 14 und die andere Hälfte auf der Höhe der die Magnetanordnung 4 gegen die Mitte des Gehäuses 1 abschliessenden äusseren Gruppe von Magnetplatten 14 liegt.

In allen Fällen dient der Wechsel zwischen den beiden Lagen dazu, ferromagnetische Partikel, welche in der Probenflüssigkeit suspendiert sind, von einem seitlichen Wandbereich des Probenflüssigkeitsbehälters zum gegenüberliegenden durch die Flüssigkeit zu ziehen und dadurch deren Wechselwirkung mit derselben zu intensivieren. Auf diese Weise kann der Wirkungsgrad, mit dem chemisch aktive Substanzen an ihren Oberflächen bestimmte Komponenten in der Probenflüssigkeit binden, ebenso verbessert werden wie derjenige der Reinigung der Partikel in einer Waschflüssigkeit, wie dies beides im Rahmen des folgenden Beispiels eines im erfindungsgemässen Magnetseparators ausgeführten Verfahrens näher erläutert wird.

Bei diesem Verfahren, welches vorzugsweise rechnergesteuert und vollautomatisch abläuft, wird aus einer RNA-Probe mRNA isoliert. Dabei ist in die Aufnahme 2 eine Halterung mit 48 Eppendorf-Gefässen 15 eingesetzt. Für das Verfahren werden Elemente des BIOMAG®-mRNA-Reinigungskits der Firma PerSeptive Diagnostics verwendet. Zuerst werden mit dem Magnetseparator in der ersten Einstellung (Fig. 1a) - Aufnahme 2 in Arbeitsposition, Magnetanordnung 4 in Passivposition - in jede der Eppendorf-Gefässe 15 300 µl BIOMAG Oligo (dT) 20 pipettiert. Diese Flüssigkeit enthält ferromagnetische Partikel, deren Oberfläche mit einer Substanz beschichtet ist, welche mRNA spezifisch bindet. Anschliessend wird der Magnetseparator durch Anheben der Basisplatte 3 und damit der Magnetanordnung 4 in die Aktivposition in die zweite Einstellung (Fig. 1b) gebracht.

Durch das nun jeweils etwas oberhalb ihres unteren Endes seitlich auf die Eppendorf-Gefässe 15 einwirkende Magnetfeld werden die Partikel an den den Magnetplatten 14 jeweils nächstgelegenen seitlichen Wandbereichen derselben zusammengezogen. Anschliessend wird der Ueberstand der Probenflüssigkeit abpipettiert. Dazu kann eine automatische Pipettiervorrichtung mit einem Robotarm eingesetzt werden.

Die RNA-Probe wird, nachdem sie ausserhalb des Magnetseparators mit Wasser, das mit DEPC, einem antibakteriellen Puffer, behandelt wurde und auf 270 µl verdünnt, 5 min auf 55°C gehalten und mit 30 µl 5M-NaCl-Lösung versetzt wurde, zum BIOMAG Oligo dt (20) in die Eppendorf-Gefässe 15 pipettiert. Anschliessend wird die Magnetanordnung 4 mehrmals zwischen der ersten Lage (Fig. 2a) und der zweiten Lage (Fig. 2c) hin- und herverschoben, wobei sie wie beschrieben zum Wechsel der Lage jeweils in die Passivposition (Fig. 2b) abgesenkt wird. Dadurch werden jeweils die Partikel mehrmals abwechselnd an gegenüberliegenden Wandbereichen der Eppendorf-Gefässe 15 zusammengezogen. Dabei durchwandern sie die Probenflüssigkeit und haben Gelegenheit, die in derselben verteilte mRNA zu binden. Schliesslich wird, mit der Magnetanordnung 4 in der Aktivposition und dementsprechend an einem Wandbereich zusammengezogenen Partikeln der Ueberstand möglichst vollständig abpipettiert.

Anschliessend wird die Magnetanordnung 4 in die Passivposition abgesenkt (Fig. 1a), 300 µl Waschpuffer in die Eppendorf-Gefässe 15 pipettiert und die Magnetanordnung 4 wieder in die Aktivposition gehoben (Fig. 1b). Eventuell erfolgen dann mehrere Wechsel der Magnetanordnung 4 zwischen der ersten Lage (Fig. 2a) und der zweiten Lage (Fig. 2c).

Mit der Magnetanordnung 4 in der Aktivposition wird dann der Waschpuffer abpipettiert. Der Vorgang wird wiederholt.

Schliesslich wird die Magnetanordnung 4 in die Passivposition abgesenkt (Fig. 1b), 75-150 µl mit DEPC behandeltes Wasser dazupipettiert und die Aufnahme 2 in die Heizposition verfahren (Fig. 1c). Nach Anheben der Heizplatte 5 in die Aktivposition (Fig. 1d) werden die Proben in den Eppendorf-Gefässen 15 auf 55°C erwärmt und 2 min auf dieser Temperatur gehalten. Dadurch löst sich die an die Partikel gebundene mRNA von denselben.

Die Heizplatte 5 wird nun wieder in die Passivposition abgesenkt (Fig. 1c), die Aufnahme 2 in die Arbeitsposition verfahren (Fig. 1a) und die Magnetanordnung 4 in die Aktivposition angehoben, so dass sich die Partikel wiederum jeweils an einem Wandbereich der Eppendorf-Gefässe 15 sammeln. Anschliessend wird der Ueberstand mit der von den Partikeln abgelösten mRNA abpipettiert. Die Behandlung der Partikel mit DEPC-Wasser, die Erwärmung und das Abpipettieren können zur Verbesserung der Ausbeute wiederholt werden.

Der erfindungsgemässe Magnetseparator kann im Rahmen der Erfindung auf verschiedene Weisen abgewandelt werden. Insbesondere kommt es nur auf die Relativbewegungen der verschiedenen Teile wie der Aufnahme, der Magnetanordnung und der Heizvorrichtung an, die auf verschiedenste Weisen bewerkstelligt werden können. Er kann auch z. B. durch entsprechende Ausbildung der Aufnahme so ausgestaltet und durch Bereitstellung weiterer angepasster Magnetanordnungen und wo nötig Heizvorrichtungen ergänzt werden, dass weitere oder andere Probenflüssigkeitsbehälter als die beschriebenen bearbeitet werden können. Als Materialien für Gehäuse, Aufnahme und Basisplatte kommen Metall, insbesondere Aluminium, eventuell auch Kunststoff in Frage.

### Bezugszeichenliste

- 1: Gehäuse
- 2: Aufnahme
- 3: Basisplatte
- 4: Magnetanordnung
- 5: Heizplatte
- 6: Schrittmotor
- 7: Gewindestange
- 8: Gewindebuchse
- 9: Hebevorrichtung
- 10a,b: Zahnräder
- 11: Zahnriemen
- 12: Rolle
- 13: Hebefläche
- 14: Magnetplatte
- 15: Eppendorf-Gefäss
- 16: Mikrotiterplatte
- 17: Gefäss der Mikrotiterplatte 16
- 18: Reagenzglas
- 19: Ausnehmung der Heizplatte 5

## Patentansprüche

1. Magnetseparator mit einer Heizvorrichtung (5) und mit einer Aufnahme (2) für mindestens einen Probenflüssigkeitsbehälter sowie mit einer unterhalb der Aufnahme (2) angeordneten Magnetanordnung (4), welche gegenüber der Aufnahme mindestens vertikal zwischen einer Aktivposition, in welcher sie bis in unmittelbare Nähe des mindestens einen Probenflüssigkeitsbehälters reicht und einer Passivposition, in welcher sie mit Abstand unterhalb desselben liegt, verschiebbar ist, **dadurch gekennzeichnet, dass** die Heizvorrichtung (5) neben der Magnetvorrichtung angeordnet ist, und dass die Aufnahme (2) gegenüber der Magnetanordnung (4) zwischen einer Arbeitsposition, in welcher sie oberhalb der Magnetanordnung liegt und einer weiteren Position, in welcher sie gegenüber der Magnetanordnung (4) horizontal versetzt und oberhalb der Heizvorrichtung (5) angeordnet ist, verschiebbar ist.

2. Magnetseparator nach Anspruch 1, **dadurch gekennzeichnet, dass** die Heizvorrichtung ebenfalls gegenüber der Aufnahme (2) mindestens vertikal zwischen einer Aktivposition, in welcher sie bis in unmittelbare Nähe des mindestens einen Probenflüssigkeitsbehälters reicht und einer Passivposition, in welcher sie mit Abstand unterhalb desselben liegt, verschiebbar ist.

3. Magnetseparator nach Anspruch 2, **dadurch gekennzeichnet, dass** er ein Gehäuse (1) umfasst, in welchem die Magnetanordnung (4) und die Heizvorrichtung vertikal verschiebbar eingebaut sind und die Aufnahme (2) horizontal verschiebbar eingebaut ist.

4. Magnetseparator nach Anspruch 3, **dadurch gekennzeichnet, dass** er zur vertikalen Verschiebung der Magnetanordnung (4) und der Heizvorrichtung mindestens eine Hebevorrichtung (9) umfasst mit mindestens einem um eine horizontale Achse drehbaren Hebel, der mit einem Fortsatz unter eine horizontale Hebefläche (13) greift, während die Magnetanordnung (4) und die Heizvorrichtung vertikal geführt sind.

5. Magnetseparator nach Anspruch 4, **dadurch gekennzeichnet, dass** der Hebel als Zahnrad (10a, 10b) ausgebildet ist, welches mittels eines über dasselbe laufenden Zahnriemens (11) antreibbar ist.

6. Magnetseparator nach einem der Ansprüche 1 bis 5, **dadurch gekennzeichnet, dass** die Magnetanordnung (4) mehrere mindestens annähernd vertikale Magnetplatten (14) aufweist, welche sich über die Länge der Magnetanordnung (4) erstrecken.

7. Magnetseparator nach Anspruch 6, **dadurch gekennzeichnet, dass** die Magnetplatten (14) begrenzt querverschiebbar sind.

8. Magnetseparator nach Anspruch 7, **dadurch gekennzeichnet, dass** die Magnetanordnung (4) auf einer lediglich vertikal verschiebbaren Basisplatte (3) angeordnet ist, der gegenüber sie querverschieblich ist.

9. Magnetseparator nach einem der Ansprüche 1 bis 8, **dadurch gekennzeichnet, dass** die Heizvorrichtung als Heizplatte (5) mit Vertiefungen (19) an der Oberseite ausgebildet ist.

10. Magnetseparator nach Anspruch 9, **dadurch gekennzeichnet, dass** die Heizplatte (5) aus Metall besteht und an ihrer Unterseite elektrische Heizelemente angebracht sind.

11. Magnetseparator nach einem der Ansprüche 8 bis 10, **dadurch gekennzeichnet, dass** die Heizvorrichtung ebenfalls auf der Basisplatte (3) angeordnet ist.

12. Magnetseparator nach einem der Ansprüche 2 bis 11, **dadurch gekennzeichnet, dass** die Magnetanordnung (4) und die Heizvorrichtung nach oben abnehmbar sind.

13. , Magnetseparator nach einem der Ansprüche 1 bis 12, **dadurch gekennzeichnet, dass** die Aufnahme (2) als Rahmen ausgebildet ist, der mehrere einander überlagernde Oeffnungen unterschiedlichen Formats jeweils mindestens teilweise umgibt.

## Claims

1. Magnetic separator with a heating device (5) and with a receptacle (2) for at least one sample liquid container and a magnet arrangement (4) which is situated underneath the receptacle (2) and can be displaced at least vertically between an active position in which it extends into the immediate vicinity of at least one sample liquid container and a passive position in which it lies some distance below this container, **characterized in that** the heating device (5) is located next to the magnet arrangement (4) and the receptacle (2) can be displaced relative to the magnet arrangement (4) between a working position, in which it lies over the magnet arrangement and another position in which it is displaced horizontally relative to the magnet arrangement (4) and positioned over the heating device (5).

2. Magnetic separator according to Claim 1, **characterized in that** the heating device also can be displaced relative to the receptacle (2) at least vertically between an active position in which it extends into the immediate vicinity of at least one sample liquid container and a passive position in which it lies some distance below this container.

3. Magnetic separator according to Claim 2, **characterized in that** it comprises a housing (1) in which the magnet arrangement (4) and the heating device are incorporated so that they can be vertically displaced and the receptacle (2) is incorporated so that it can be horizontally displaced.

4. Magnetic separator according to Claim 3, **characterized in that** for the vertical displacement of the magnet arrangement (4) and the heating device, it is provided with at least one lifting device (9) with at least one lever which is able to rotate about a horizontal spindle and engages by means of a projection with a horizontal lifting surface (13), while the magnet arrangement (4) and the heating device are guided vertically.

5. Magnetic separator according to Claim 4, **characterized in that** the lever is in the form of a toothed wheel (10a, b) that can be actuated by means of a toothed belt (11) running over it.

6. Magnetic separator according to any one of Claims 1 to 5, **characterized in that** the magnet arrangement (4) comprises a plurality of at least approximately vertical magnetic plates (14) extending over the length of the magnet arrangement (4).

7. Magnetic separator according to Claim 6, **characterized in that** the magnetic plates (14) can be displaced laterally within limits.

8. Magnetic separator according to Claim 7, **characterized in that** the magnet arrangement (4) is arranged on a base plate (3) that can be displaced only in the vertical direction and in relation to which it can be moved laterally.

9. Magnetic separator according to any one of Claims 1 to 8, **characterized in that** the heating device takes the form of a heating plate (5) with recesses (19) in its upper surface.

10. Magnetic separator according to Claim 9, **characterized in that** the heating plate (5) is made of metal and electrical heating elements are fitted to its underside.

11. Magnetic separator according to any one of Claims 8 to 10, **characterized in that** the heating device is also located on the base plate (3).

12. Magnetic separator according to any one of Claims 2 to 11, **characterized in that** the magnet arrangement (4) and the heating device can be removed from above.

13. Magnetic separator according to any one of Claims 1 to 12, **characterized in that** the receptacle (2) takes the form of a frame at least partially surrounding a plurality of openings of different formats in successive layers.

## Revendications

1. Séparateur magnétique comportant un dispositif de chauffage (5) et un logement (2) pour au moins un récipient de liquide échantillon, ainsi qu'un dispositif à aimant (4) disposé sous le logement (2), qui, par rapport au logement, peut être déplacé au moins verticalement entre une position active, dans laquelle il vient à proximité directe du réservoir de liquide échantillon, au moins au nombre de un, et une position passive, dans laquelle il repose selon un écart sous celui-ci, **caractérisé en ce que** le dispositif de chauffage (5) est disposé à côté du dispositif à aimant, et **en ce que** le logement (2), par rapport au dispositif à aimant (4), peut être déplacé entre une position de travail, dans laquelle il se trouve au-dessus du dispositif à aimant, et une autre position dans laquelle il est décalé horizontalement par rapport au dispositif à aimant (4) et est disposé au-dessus du dispositif de chauffage (5).

2. Séparateur magnétique selon la revendication 1, **caractérisé en ce que** le dispositif de chauffage peut aussi être déplacé par rapport au logement (2) au moins verticalement entre une position active, dans laquelle il atteint la proximité immédiate d'au moins un récipient de liquide échantillon, et une position passive dans laquelle il repose avec un écart en dessous de celui-ci.

3. Séparateur magnétique selon la revendication 2, **caractérisé en ce qu'**il comprend un boîtier (1) dans lequel le dispositif à aimant (4) et le dispositif de chauffage sont insérés de façon à se déplacer verticalement, et dans lequel le logement (2) est inséré pour se déplacer horizontalement.

4. Séparateur magnétique selon la revendication 3, **caractérisé en ce qu'**il comprend, pour le déplacement vertical du dispositif à aimant (4) et du dispositif de chauffage, au moins un dispositif de levage (9), ayant au moins un levier pouvant pivoter autour d'un axe horizontal, qui s'engrène avec un prolongement sous une surface de levage horizontale (13), alors que le dispositif à aimant (4) et le dispositif de chauffage sont guidés verticalement.

5. Séparateur magnétique selon la revendication 4, **caractérisé en ce que** le levier est exécuté en tant que roue dentée (10a, 10b) qui peut être entraînée au moyen d'une courroie dentée (11) qui s'étend sur celle-ci.

6. Séparateur magnétique selon l'une des revendications 1 à 5, **caractérisé en ce que** le dispositif à aimant (4) présente plusieurs plaques magnétiques (14) au moins approximativement verticales qui s'étendent sur la longueur du dispositif à aimant (4).

7. Séparateur magnétique selon la revendication 6, **caractérisé en ce que** les plaques magnétiques (14) peuvent être déplacées transversalement de façon limitée.

8. Séparateur magnétique selon la revendication 7, **caractérisé en ce que** le dispositif à aimant (4) est disposé sur une plaque de base (3), pouvant être déplacée uniquement verticalement et qu'il peut être déplacé transversalement par rapport à celle-ci.

9. Séparateur magnétique selon l'une des revendications 1 à 8, **caractérisé en ce que** le dispositif de chauffage est conçu en tant que plaque chauffante (5) ayant des creux (19) sur la face supérieure.

10. Séparateur magnétique selon la revendication 9, **caractérisé en ce que** la plaque chauffante (5) se compose de métal et que des éléments de chauffage électriques sont appliqués au niveau de sa face inférieure.

11. Séparateur magnétique selon l'une des revendications 8 à 10, **caractérisé en ce que** le dispositif de chauffage est également disposé sur la plaque de base (3).

12. Séparateur magnétique selon l'une des revendications 2 à 11, **caractérisé en ce que** le dispositif à aimant (4) et le dispositif de chauffage peuvent être enlevés par le haut.

13. Séparateur magnétique selon l'une des revendications 1 à 12, **caractérisé en ce que** le logement (2) est conçu à la façon d'un cadre qui entoure respectivement au moins partiellement plusieurs ouvertures de différents formats qui se chevauchent.
